# EUROPEAN PATENT APPLICATION

(11) **EP 0 985 561 A1**
(43) Date of publication of application: **15.03.2000**
(21) Application number: 98830539.7
(22) Date of filing: 10.09.1998
(51) Int. Cl.: B60C 27/10

(54) **Snow chain for automotive vehicles**

(71) Applicant: König S.p.A., 23847 Molteno (IT)
(72) Inventor: Kanellopoulos, Vasilios, 1256 Troinex (CH); Mallet, Olivier, 1206 Lausanne (CH); Ricard, Jean-François, 74160 Neydens (FR)
(74) Representative: Savoye, Jean-Paul

(57) **Abstract**

The present invention provides a snow chain for automotive vehicles containing a locking device (5) between at least two attachment elements of said snow chain, characterized in that it comprises at least one actuator device to release said locking device (5), one energy source (6), one control means for selectively supplying energy from said source to said actuator, said control means being operated by a wave receiver (7), and a remote manually controlled wave emitter (17) for transmitting a signal to said receiver in order that said energy source (6) supplies said actuator device with an energy amount able to release said locking device (5).

## Description

### BACKGROUND OF THE INVENTION

The present invention relates to a snow chain for automotive vehicles containing a locking device between at least two attachment elements of said snow chain.

Recent model automobiles are characterized by reduced clearance in fender wells making the use of conventional tire chains difficult or impossible. Furthermore, tires are not constant in shape but flex to a considerable extent, especially when bearing the weight of a vehicle. Lightweight cable chains are desirable but even these are apt to rub on the sides of the fender wells resulting in damage to the vehicle and the tire particularly because of chain looseness. Thus, it is of importance to secure the chains as tightly as possible to a tire for avoiding snack in both the radial and lateral directions. Since proper tightness means that release of the attachment is also more difficult, it is also useful to enhance the ease with which chains can be removed.

Conventional tire chains fastening means are somewhat cumbersome and frequently contribute to the bulk and looseness of tire chains rather than solving these problems. Chains are usually disengaged in a manner likely to be awkward and unpleasant because of moisture and road grime accumulated on the chains and tires.

Various devices have been devised to improve the fastening and releasing process of tire chains. French Patent No. 2.224.315 discloses a device for improving the fastening of the chain located on the inner side of the wheel, using a hook for guiding both ends of the chain until they interlock together. While the device helps the fastening of the chains, it does not help the release and uses an extra part (hook) which must be stored in addition to the chains. Swiss Patent No. 591 966 discloses a snow chain having a sliding guide speeding the fitting and unfastening of the chain. The sliding guide remains attached to the chains, so no separate storage is required. US patent No. 4.321.956 discloses a belt attachment for tire chains devised to facilitate the removing of the chains. All these improvements are local mechanical improvements requiring significant manipulations near or behind the wheel. Generally speaking, the problem of fastening the chains has been somewhat resolved by the existing art, several teaching allowing to first fasten the attachment on the outer side of the wheel and then translate the fastened attachment to the inner side of the wheel. In contrast, subsequent release of the fastened attachment once located on the inner side of the wheel, especially after a ride in snowy or muddy conditions, is not satisfactorily addressed by the existing art.

### SUMMARY OF THE INVENTION

The goal of the present invention is to remedy at least partially to the problems cited above. Its object is to provide a snow chain as described in claim 1. The design of the invention limits or avoids the need for cumbersome manipulations near or behind the wheel. The snow chain according to the invention contains a locking device between at least two attachment elements of said snow chain, and is characterized in that it comprises at least one actuator device to release said locking device, one energy source, one control means for selectively supplying energy from said source to said actuator, said control means being operated by a wave receiver, and a remote manually controlled wave emitter for transmitting a signal to said receiver in order that said energy source supplies said actuator device with an energy able to release said locking device.

The energy source is typically an electric battery, although other energy sources can also be used with the invention. It can be located in or on any constitutive element of the snow chain, such as cables, chains or attachments. Location in the wheel is also possible provided some functional link is made between the energy source and the actuator.

The locking device is of any kind that can be located in the limited space allowed by the application. It contains an actuator for locking and release action. Paraffin pump actuators are advantageously used in connection with heat-generating devices such as electric resistors. Examples of such actuators are disclosed in US Pat. No. 3,029,595 and 3,381,701. Actuators animated by electric motors linked to various translation means are also used, such as endless screw actuators. Actuators animated by elements made of shape memory alloys (e.g. Proteus ®, Nitinol) or bimetallic materials can also be used advantageously in connection with heat-generating devices such as electric resistors. When possible, heat-generation in the actuator can be attained by electric current directly fed through the metallic materials constituting selected parts of the actuator.

The control means is triggered by a wave receiver, and both of which are located either in or on the snow chain or the wheel. When triggered, the control means causes the energy source to supply the actuator device with an energy amount able to unlatch the locking device. The wave emitter is switchable manually and can be either located in the vehicle (e.g. on the dash-board) or independent of the vehicle (e.g. key-chain type of emitter). The waves produced by the emitter and received by the receiver are preferably infrared or radio waves, but can be of any other type (e.g. ultrasonic waves). As a back-up solution in case the emitter used for the release of the snow chain is unavailable or out of service, the snow chain according to the present invention can comprise a manually-operated switch for operating the remote-operated locking device, said switch being located on elements of the snow chain which are located on the outer side of the wheel. In another embodiment and as a different back up solution in case the emitter, the receiver, the energy source, the remote-operated locking device or any other element of the invention described herein are unavailable or otherwise not functional, the snow chain can advantageously comprise a manually-operated locking device in addition to the remote-operated locking device for release. In still another embodiment, the remote-operated locking device itself can be operated manually as well as through the remote-control system.

### BRIEF DESCRIPTION OF THE DRAWINGS

The accompanying drawings show schematically and by way of example two embodiments of the snow chain according to the present invention.
Fig. 1 is an elevational view, partially broken away, of the inner side of a vehicle drive wheel, to which a snow chain according to the present invention is attached.
Fig. 2 is a partially sectional side view of an element of Fig. 1 relating to a snow chain locking device according to the first embodiment, in latched position.
Fig. 3 is a partially sectional side view of the same, in unlatched position.
Fig. 4 is a partially sectional side view of a part of a locking device according to the second embodiment.
Fig. 5 is a perspective view of a locking device according to the second embodiment, in open position.

### DETAILED DESCRIPTION

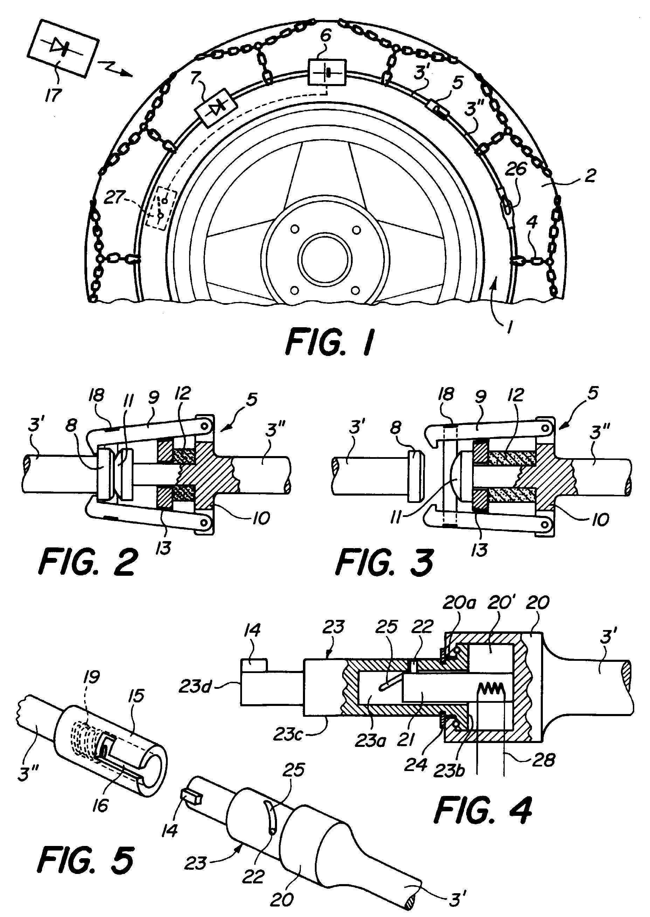

Referring to the drawings and specifically to Fig. 1, a snow chain is illustrated as secured to the inner side 1 of a wheel 2. The snow chain comprises cable 3 and transversal elements 4. A locking device 5 is located on the cable 3 between a first end 3' and a second end 3'' of said cable. A battery 6 and a wave receiver/control means 7 are located nearby, while a wave emitter 17 is located at a distance.

Fig. 2 and 3 show a cross-sectional view of the locking device 5, respectively in latched (Fig. 2) and unlatched (Fig. 3) positions. A first end 3' of cable 3 contains a metallic edge 8, having the shape of a disk whose surface is perpendicular to the cable end 3', allowing latching on the other part of the locking device 5 located on a second end 3'' of cable 3. This other part includes three arms 9 devised to latch on the metallic edge 8 located on the first end 3' of cable 3, and articulated at a base 10 of the locking device 5 around pivoting axes 9a. A shaft 20 ended by an elastic end 11 devised to come against the metallic edge 8 in the latched position is located in continuation of the second end 3'' of the cable 3 and of the base 10. A sliding ring 13 having a low friction interface is located around the shaft 20 between the base 10 and the elastic end 11. An axially expandable paraffin actuator 12 is located around the shaft 20 between the base 10 and the sliding ring 13. A spring ring 18 surrounding the arms 9 ensures proper stability of the latching and continuous contact of the arms 9 with the ring 13. Since each of the three arms 9 forms an acute angle at their extremities with the longitudinal axis of the locking device 5, the triggering of the actuator 12 provokes the translation of the ring 13 which causes the three arms to open and to unlatch the locking device.

According to another embodiment, the arms 9 could be made of shape memory alloy or bimetallic material, so that when heated by an electric current from the battery 6, the free ends of the arms 9 move apart from the metallic edge 8. In this case the arms have not to be articulated at the base 10.

Fig. 4 and Fig. 5 show another embodiment of a locking device in unlatched position, in which a first end 3' of cable 3 is terminated by an enlarged member 20 fixed to the end 3' of the cable 3. This enlarged member 20 comprises a cylindrical cavity 20', which opens axially through an opening 20a, the diameter of which is smaller that of cylindrical cavity 20'. A proximal end 23b of a male locking member 23 has a larger diameter than its middle section 23c and distal section 23d, so that the diameter of proximal end 23b corresponds to that of cylindrical cavity 20', and that the diameter of middle section 23c corresponds to that of opening 20a. Male locking member 23 is rotatively received into cylindrical cavity 20' and axially fixed by a circlip 24. A hollow cylinder 23a opens at the proximal end of the locking member 23 engaged into the cylindrical cavity 20'. A longitudinal expansion cylindrical paraffin actuator 21 has a first end fixed at the bottom of the cylindrical cavity 20' while the second end extends into the hollow cylinder 23a. A helical linear opening 25 is cut through the wall of the hollow cylinder 23a and a pin 22 extends radially from the free end of the paraffin actuator 21 and engages into the helical opening 25. A locking element 14 radially projects from the free end of the locking member 23. The second end 3'' of cable 3 is solid with a female locking member comprising a hollow cylinder 15, the wall of which has a L-shaped cut 16 which opens at the extremity of the female locking member in order to receive the locking element 14 of the male locking member 23 when in latched position. The helical opening 25 in which the pin 22 is engaged transforms axial movement of the free end of the paraffin actuator 21 into rotation of the locking member 23 and pin 14 and allows actuator-operated unlatching of the locking device. In order to unlatch this device, a resistor 28 connected to the battery 6 controlled by the wave receiver/control means 7 causes the paraffin actuator 21 to warm up hence extend axially when electric current is applied through it. A spring 19 located in the bottom of the hollow cylinder 15 completes the unlatching process after the actuator has been activated. In latched position, spring 19 also maintains the locking element 14. In this embodiment the locking member 23 can also be unlatched manually.

As a back up solution in case of malfunction of the remote-operated system, the snow chain can comprise a manually-operated locking device 26 (fig.1) in addition to the remote-operated locking device 5 for release. As an additional back-up solution in case the emitter 17 is unavailable or out of service, the snow chain according to the present invention can comprise a manually-operated switch 27 (fig.1) for operating the remote-operated locking device 5, said switch being located on elements of the snow chain which are located on the outer side of the wheel.

The description has just shown preferred embodiments of the invention. It will be apparent to those skilled in the art that many other changes may be made without departing from the invention as described in the following claims.

## Claims

1. Snow chain for automotive vehicles containing a locking device (5) between at least two attachment elements of said snow chain, characterized in that it comprises at least one actuator device to release said locking device (5), one energy source (6), one control means for selectively supplying energy from said source to said actuator, said control means being operated by a wave receiver (7), and a remote manually controlled wave emitter (17) for transmitting a signal to said receiver in order that said energy source (6) supplies said actuator device with an energy amount able to release said locking device (5;23).

2. The snow chain of claim 1, in which said actuator is a paraffin pump.

3. The snow chain of claim 1, in which said actuator is essentially constituted of an electric motor linked to a translation means.

4. The snow chain of claim 3, in which said translation means is an endless screw.

5. The snow chain of claim 1, in which said actuator is essentially constituted of elements made of shape memory materials.

6. The snow chain of claim 1, in which said actuator is essentially constituted of elements made of bimetallic materials.

7. The snow chain of anyone of claims 1 to 6, in which said wave emitter (17) and said wave receiver (7) are respectively an infrared emitter and an infrared receiver.

8. The snow chain of anyone of claims 1 to 6, in which said wave emitter (17) and said wave receiver (7) are respectively a radio waves emitter and a radio waves receiver.

9. The snow chain of anyone of claims 1 to 8, which further comprises a manually-operated control (27) connected to energy source (6), said switch being located on elements of the snow chain which are located on the outer side of the wheel.

10. The snow chain of anyone of claims 1 to 9, which comprises a manually-operated locking device (26) in addition to said remote-operated locking device (5;23).

11. The snow chain of anyone of claims 1 to 9, in which said locking device (23) can be operated manually as well as through the remote-control system.
